# EUROPÄISCHE PATENTSCHRIFT

(11) **EP 1 394 079 B1**
(45) Veröffentlichungstag und Bekanntmachung des Hinweises auf die Patenterteilung: **18.01.2006**
(21) Anmeldenummer: 02016098.2
(22) Anmeldetag: 19.07.2002
(51) Int. Cl.: B65G 21/20, B65G 15/58

(54) **Fördervorrichtung zum insbesondere hängenden Transport von Werkstücken**
Conveying device in particular for suspended transport of workpieces
Dispositif de transport en particulier pour le transport suspendu de pièces

(43) Veröffentlichungstag der Anmeldung: 03.03.2004
(73) Patentinhaber: Sundwig GmbH, 58675 Hemer (DE)
(72) Erfinder: Erlewein, Meinrad, 77743 Neuried (DE); Schley, Udo, 77933 Lahr/Sutz (DE); Himmelsbach, Klemens, 77933 Lahr (DE)
(74) Vertreter: Kaiser, Magnus

(56) Entgegenhaltungen:
- EP-A- 0 827 918
- EP-A- 0 893 372
- EP-A- 1 000 879
- DE-A- 19 653 381

## Beschreibung

Die Erfindung betrifft eine Fördervorrichtung zum insbesondere hängenden Transport von Werkstücken nach dem Oberbegriff des beigefügten Patentanspruchs 1. Demnach umfasst die betreffende Fördervorrichtung ein umlaufendes Förderband mit dieses durchsetzenden Ansaugöffnungen zum Festhalten der Werkstücke, eine Förderbandhalterung, die in den meisten Fällen als Gehäuse ausgebildet sein wird, mit einer Anlagefläche für das Förderband, an welcher zumindest der an die Ansaugöffnungen angrenzende Bereich der Rückseite des Förderbandes gleitend anliegt, mindestens einen in die Anlagefläche integrierten, zum Förderband hin offenen Längskanal, der sich entlang der Bewegungsrichtung des Förderbandes erstreckt und mit dessen Ansaugöffnungen fluchtet, Mittel zum Erzeugen eines Unterdrucks, die mit dem Längskanal in Wirkverbindung stehen, seitliche, an der Förderbandhalterung angebrachte Umgriffsleisten zum Führen des Förderbands, sowie eine Dichtleiste aus weichelastischem Material im Bereich der Ansaugöffnungen.

Solche Fördervorrichtungen sind in der blechverarbeitenden Industrie seit längerem bekannt. Sie werden in der Regel bei nicht-magnetischen Werkstücken, jedoch zunehmend auch als Alternative zu magnetischen Förderbändern bei ferromagnetischen Werkstücken eingesetzt. Ein typisches Einsatzgebiet ist das maschinelle Stapeln von automatisch gestanzten oder geschnittenen Blechen, deren Oberflächen nicht verkratzt werden sollen. Hierbei werden die Bleche vom Austragstransportband einer Schere oder einer Stanzvorrichtung übernommen und hängend bis zu einer Abwurfstelle transportiert, an der die Bleche aufeinandergestapelt werden.

Wenn beispielsweise eine Stapelvorrichtung mehrere, hintereinander angeordnete Stapelplätze überspannt, muss der Unterdruck, der die Werkstücke am Förderband festhält, abschaltbar sein. Als Unterdruck erzeugende Vorrichtung werden daher zumeist Ejektoren verwendet, die schnell ein- und ausgeschaltet werden können. Ejektoren haftet allerdings ein großer Nachteil an: Sie reagieren sehr empfindlich auf Eintritt von Falschluft, da sie nicht in der Lage sind, große Luftvolumina in kurzer Zeit zu evakuieren.

Es ist daher bei Fördervorrichtungen der eingangs genannten Art von größter Wichtigkeit, den Eintritt von Falschluft in den evakuierten Längskanal in der Anlagefläche der Förderbandhalterung zu vermeiden. Die problematischste Stelle ist hierbei naturgemäß der Übergang zwischen dem sich bewegenden Förderband und der ortsfesten Anlagefläche. Idealerweise darf dort lediglich durch die Ansaugöffnungen des Förderbandes Luft in den zum Förderband hin offenen Längskanal gesaugt werden, und nicht etwa seitlich zwischen dem Förderband und der Anlagefläche hindurch. Diese Problematik wird noch dadurch verschärft, dass bei einem hängenden Transport von Werkstücken die Gewichtskraft in die unmittelbare Umgebung der Ansaugöffnungen des Förderbandes eingeleitet wird, was unweigerlich zu einem mehr oder weniger starken Durchhängen des Förderbandes führt. Hierdurch wird jedoch die Rückseite des Förderbandes gerade im Bereich der Ansaugöffnungen von der Anlagefläche, an der sie dichtend anliegen sollte, weggezogen.

Diese Problematik hat im Stand der Technik zu unterschiedlichen Lösungsansätzen geführt:

In der EP-A-0 893 372, in der insbesondere eine Fördervorrichtung der eingangs genannten Art beschrieben wird, wird vorgeschlagen, auf der Rückseite des Förderbandes Halteelemente vorzusehen, die die Anlagefläche der Förderbandhalterung umgreifen und mit elastischen Dichtkanten in seitlich hinter der Anlagefläche vorgesehene Nuten eingreifen, wodurch letztlich das Förderband über die elastische Rückstellkraft der Dichtkanten an der Anlagefläche gehalten wird. Gleichzeitig sorgen die Dichtkanten für eine Abdichtung gegen einen Eintritt von Falschluft zwischen das Förderband und die Anlagefläche. Eine derartige Ausbildung des Förderbandes erfordert allerdings einen hohen fertigungstechnischen Aufwand; außerdem ergibt sich hierdurch eine erhebliche Gesamtbauhöhe des Förderbandes, die am Antriebsrad und an der Umlenkrolle der Fördervorrichtung wegen der dort gegebenen Krümmungsradien Probleme bereitet.

Ein anderer Ansatz ist der DE 196 36 161 A1 zu entnehmen. Nach diesem Stand der Technik, der ein Förderband für eine Fördervorrichtung der eingangs genannten Art betrifft, werden die Ansaugöffnungen so dimensioniert, dass sie nur ein sehr geringes zu evakuierendes Volumen aufweisen. Hierdurch wird es möglich, die Unterdruckkanäle in der Anlagefläche so auszulegen, dass nur ein geringer Volumenstrom hindurchtreten kann, so dass letztlich ein Ansaugen von Falschluft nur noch so wenig ins Gewicht fällt, dass der Unterdruck nicht zusammenbricht. Dieser Stand der Technik verbessert also nicht die Abdichtung, sondern vermindert die nachteiligen Folgen einer mangelhaften Dichtheit. Im Vergleich zur zuvor genannten EP-A-0 893 372 ergibt sich hier eine nur sehr geringe Bauhöhe des Förderbandes. Es erscheint gleichwohl nicht optimal, das Eindringen von Falschluft in die Unterdruckvorrichtung hinzunehmen, da die Unterdruckvorrichtung dementsprechend leistungsfähig dimensioniert werden muss, während die Haltekraft zum Festhalten der zu transportierenden Werkstücke gering bleibt.

Ausgehend von diesem Stand der Technik liegt der Erfindung daher die Aufgabe zugrunde, eine Fördervorrichtung der eingangs genannten Art insofern zu verbessern, dass der Eintritt von Falschluft in die Unterdruckvorrichtungen weitgehend vermieden werden kann, wobei der fertigungstechnische Aufwand für das Förderband dennoch vorteilhaft gering bleibt.

Gelöst ist diese Aufgabe durch eine Fördervorrichtung mit den Merkmalen des beigefügten Patentanspruchs 1.

Vorteilhafte Ausgestaltungen und Weiterbildungen der Erfindung ergeben sich aus den beigefügten Patentansprüchen 2 bis 14.

Erfindungsgemäß ist das Förderband also im Bereich der Ansaugöffnungen mit einer Dichtleiste aus weichelastischem Material versehen, während die seitlichen, an der Förderbandhalterung angebrachten Umgriffsleisten das Förderband halten und gleichzeitig gegen die Anlagefläche vorspannen. Die Dichtleiste aus weichelastischem Material wird also von den Ansaugöffnungen des Förderbandes durchsetzt. Sie gleitet entlang der Anlagefläche und dichtet hierbei wegen ihrer weichelastischen Eigenschaften schon von vornherein besser ab, als eine Oberfläche aus dem für einen Trägergurt eines Förderbandes üblichen Material. Dies wird wirkungsvoll durch die seitlichen Umgriffsleisten unterstützt, die das Förderband und damit im wesentlichen die weichelastische Dichtleiste gegen die Antagefläche vorspannen. Die weichelastische Dichtleiste ist kompressibel, so dass es sinnvoll ist, sie über den Rest des Förderbandes überstehend zu fertigen, um den Abdichteffekt zuverlässig aufrecht zu erhalten. Gleichzeitig sorgt die Kompressibilität dafür, dass die Dichtleiste beim Umlenken am Antriebsrad und an der Umlenkrolle der Fördervorrichtung keine Schwierigkeiten verursacht. Dennoch ist die Bauhöhe des Förderbandes mit der erfindungsgemäßen Dichtleiste vorteilhafterweise deutlich kleiner, als bei den bekannten Förderbändern mit rückseitigen Halteeinrichtungen.

Ein großer Vorteil der erfindungsgemäßen Ausbildung des Förderbandes besteht darin, dass in der Fördertechnik verbreitet eingesetzte, handelsübliche Zahnriemen aus mit Stahllitzen verstärktem Kunststoff, wie Polyurethan, verwendet werden können, wobei einfach in dem Bereich, der die Ansaugöffnungen enthalten soll (üblicherweise die Mitte des Förderbandes) die Zahnung lediglich weggefräst und eine Dichtleiste, die durchaus aus demselben Grundmaterial bestehen kann, jedoch eine geringere Shore-Härte aufweist, in die Ausfräsung eingeklebt oder dort aufgeschweißt wird. Nach Herstellen der Ansaugöffnungen ist das Förderband in erfindungsgemäßer Ausgestaltung dann bereits fertig.

Erfindungsgemäß ist die Dichtleiste an ihrer an der Anlagefläche anliegenden Oberfläche mit einer verschleißfesten Gleitschicht versehen, um das Verschleißverhalten, das bei weichelastischen Materialien normalerweise nicht sehr gut ist, zu verbessern. Hierfür kommen insbesondere Gewebeschichten in Frage, die in der Fördertechnik an sich bekannt sind. Um gleichwohl hervorragende abdichtende Eigenschaften zur Oberfläche der Anlagefläche sicherzustellen, kann diese Gleitschicht, die insbesondere eine Gewebeschicht ist, mit einem hochviskosen Medium, insbesondere mit einem Fett auf Silikonbasis versehen sein. Solche Fette sind in der Vakuumtechnik - allerdings noch nicht im hier vorliegenden Fachgebiet - als "Vakuumfett" an sich ebenfalls bekannt.

Diese bevorzugten Ausgestaltungen der sensiblen Schnittstelle zwischen dem Förderband und der Anlagefläche der Förderbandhalterung führen zu einer zuverlässigen Abdichtung des Längskanals gegen Eintritt von Falschluft, wobei gleichzeitig ein sehr geringer Reibungswiderstand und ein entsprechend gutes Verschleißverhalten erzielt werden.

Weitere Vorteile ergeben sich ferner, wenn die seitlichen Umgriffsleisten, die das Förderband halten und mit seiner Dichtleiste gegen die Anlagefläche vorspannen, höhenverstellbar an der Förderbandhalterung angebracht sind. Dies ermöglicht jederzeit ein Justieren oder Nachstellen der Umgriffsleisten, um die Vorrichtung in einem optimalen Kompromiss zwischen einer guten Dichtwirkung an der Berührungsfläche zwischen der Dichtleiste und der Anlagefläche und einem möglichst geringen Reibungswiderstand betreiben zu können. Hierfür können die seitlichen Umgriffsleisten beispielsweise mit Langlöchern für eine höhenverstellbare Schraubverbindung versehen sein. Alternativ ist auch eine Klemmverbindung mit der Förderbandhalterung möglich.

Besonders gut harmoniert die erfindungsgemäße Ausgestaltung einer Fördervorrichtung mit einem Förderband, das an seiner Transportseite eine Anzahl von Saugnäpfen aufweist, deren Innenflächen jeweils mit einer Ansaugöffnung des Förderbandes in Wirkverbindung stehen. Solche Saugnäpfe sorgen für ein sicheres Festhalten der Werkstücke bei gleichzeitig kleinen zu evakuierenden Volumina und gewährleisten darüber hinaus, dass die Werkstücke von der Transportseite des Förderbands beabstandet transportiert werden, so dass sich etwaige Abdeckmaßnahmen für die Umgriffsleisten zum Schutz der Werkstückoberflächen erübrigen. Umgekehrt bietet dies den Vorteil, dass die seitlichen Umgriffsleisten so breit ausgebildet sein können, dass sie sich zur Mitte des Förderbandes hin bis nahe an den Bereich der Saugnäpfe heran erstrecken. Es liegt auf der Hand, dass die erfindungsgemäß durch die Umgriffsleisten auf das Förderband ausgeübte Vorspannung auf diese Weise sehr einfach und komfortabel erzeugt werden kann, und zwar ohne Gefahr eines möglicherweise mittigen Durchhängens des Förderbandes.

Wenn ein erfindungsgemäßes Förderband mit Saugnäpfen ausgerüstet ist, bietet es weitere besondere Vorteile, wenn die seitlichen Umgriffsleisten sich nicht nur bis nahe an den Bereich der Saugnäpfe heran erstrecken, sondern auch noch so profiliert sind, dass sie nahezu so hoch wie die Saugnäpfe über das Förderband überstehen. Derart von den seitlichen Umgriffsleisten flankiert, sind die Saugnäpfe weitgehend gegen Beschädigungen durch etwa fehlgestellte Bleche geschützt, deren Kanten sonst (wie im Stand der Technik oft der Fall) hinter den Saugnapf, also zwischen den Saugnapf und die Oberfläche des Trägergurtes gelangen und den Saugnapf abscheren oder zumindest ernsthaft beschädigen. Solche hochstehenden Blechkanten würden nach dieser Ausgestaltung der Erfindung von den profilierten seitlichen Umgriffsleisten abgewiesen werden. Die entsprechende Profilierung der Umgriffsleisten kann beispielsweise einfach durch zweifaches Abkanten hergestellt werden; es sind aber auch Strangpressprofile oder massive Leisten denkbar.

Es sei an dieser Stelle angemerkt, dass es im Stand der Technik durchaus bereits Ansätze gegeben hat, Saugnäpfe eines Unterdruck-Förderbandes durch seitlich flankierende Leisten zu schützen (vgl. die DE 299 22 248 U1); jedoch sind diese Leisten jeweils Teil des sich bewegenden Förderbandes gewesen, was beim Umlenken des Förderbandes am Antriebsrad oder an der Umlenkrolle Schwierigkeiten macht. Die hier vorliegenden feststehenden Leisten erstrecken sich demgegenüber nur entlang der Transportstrecke, so dass sich an den Umlenkpunkten des Förderbandes keinerlei Probleme ergeben.

Weitere Vorteile ergeben sich, wenn die Saugnäpfe elastisch klemmend in oder auf Halteelementen sitzen, welcher ihrerseits fest an der Transportseite des Förderbandes fixiert sind. Eine Fehlfunktion der Fördervorrichtung, bei der eine Werkstückkante hinter den Saugnapf gelangt, führt hierdurch vorteilhafterweise nicht mehr zur Beschädigung des Förderbandes. Vielmehr wird lediglich der Saugnapf von seinem Halteelement abgezogen. Selbst wenn er hierdurch beschädigt wird, kann eine Bedienperson, ohne Werkzeug zur Hand haben zu müssen, einen Ersatzsaugnapf auf das Halteelement aufsetzen und die Fördervorrichtung nach einem vorteilhaft kurzen Stillstand wieder weiterbetreiben. Ein vorteilhafter Nebeneffekt der lösbaren Anbringung der Saugnäpfe besteht darin, dass die erfindungsgemäße Fördervorrichtung mit geringstem Aufwand auf andere Saugnapfformen und -größen umgerüstet werden kann.

Die Halteelemente für die Saugnäpfe sind vorzugsweise auf die Außenfläche der Transportseite des Förderbandes aufgesetzt und bevorzugt mittels Kleben oder Schweißen dort fixiert. Dies hat den Effekt, dass das Förderband durch die Anbringung der Halteelemente nicht geschwächt wird, was bei das Förderband durchgreifenden Halteelementen der Fall wäre. Im Gegenteil: Wenn die Halteelemente mit einem Fuß versehen sind, der entsprechend breit dimensioniert und steif ausgeführt ist, ergibt sich eine zusätzlich stabilisierende Wirkung auf den Gurtkörper. Insbesondere im Zusammenhang mit einer breiten Ausbildung der seitlichen Umgriffsleisten, die bis direkt an die Füße der Halteelemente herangeführt sein können, ergibt sich ein zusätzlicher Stabilisierungseffekt des normalerweise aus einem handelsüblichen Zahnriemen bestehenden Förderbandes gegen ein Durchhängen. Die Vorspannung des Förderbandes und insbesondere von dessen Dichtleiste an die Anlagefläche der Förderbandhalterung wird hierdurch noch verbessert.

Die Halteelemente können im wesentlichen aus einem Fuß, einem Schaft mit einem Saugkanal und einem gegenüber dem Schaft vorspringenden Haltering bestehen, wobei die Saugnäpfe jeweils den Haltering elastisch hintergreifen und sich außerdem am Schaft und am Fuß des Halteelements abstützen. Eine solche Ausgestaltung der Saugnapfbefestigung führt zu einer optimalen Stabilität, ohne die im Falle einer Fehlfunktion vorteilhafte Lösbarkeit des Saugnapfs zu beeinträchtigen.

Das Förderband weist bevorzugt außer den Saugnäpfen keine lösbaren Teile auf, was bedeutet, dass auch keine Schrauben, Nieten oder dergleichen zur Befestigung der Halteelemente eingesetzt werden. Denn auch festsitzende Befestigungsschrauben können sich nach längerem Betrieb lösen oder auch durch Nachlässigkeiten bei der Montage oder Wartung mit einem zu geringen Drehmoment angezogen worden sein, so dass sie sich nach einiger Zeit lösen können. Insbesondere beim hängenden Transport von Werkstücken mit empfindlichen Oberflächen, wie beispielsweise Blechen für die Automobilproduktion, können derartige Befestigungselemente, wenn sie unbeabsichtigt herausfallen und verlorengehen, großen Schaden verursachen.

Eine Profilierung der Umgriffsleisten zur Flankierung der bevorzugt vorhandenen Saugnäpfe ist zweckmäßigerweise dann, wenn die Saugnäpfe an separaten Halteelementen angebracht sind, so dimensioniert, dass sie höher als die Halteelemente, aber weniger hoch als die Saugnäpfe über das Förderband überstehen. Die Halteelemente sind dann zuverlässig vor einem unerwünschten Kontakt mit gegebenenfalls fehlgestellten Werkstücken geschützt. Eine Gefahr der Beschädigung der Halteelemente oder deren Befestigung scheidet somit höchst vorteilhaft aus. Da die seitlichen Umgriffsleisten feststehen, dürfen sie selbstredend nicht genauso hoch wie die Saugnäpfe über das Förderband überstehen, um deren Transportfunktion nicht zu beeinträchtigen. Bei einer solchen Ausbildung der profilierten Umgriffsleisten kann also in keinem Fall Schaden entstehen, der über eine Beschädigung der sehr leicht zu ersetzenden Saugnäpfe hinausginge.

Ein Ausführungsbeispiel der vorliegenden Erfindung wird im folgenden anhand der beigefügten Zeichnungen näher beschrieben und erläutert. Es zeigen:
- Figur 1: eine seitliche Schnittdarstellung eines Abschnitts einer erfindungsgemäßen Fördervorrichtung;
- Figur 2: einen Schnitt durch den unteren Teil der in Figur 1 gezeigten Vorrichtung, wobei die Schnittebene senkrecht zu derjenigen in Figur 1 steht.

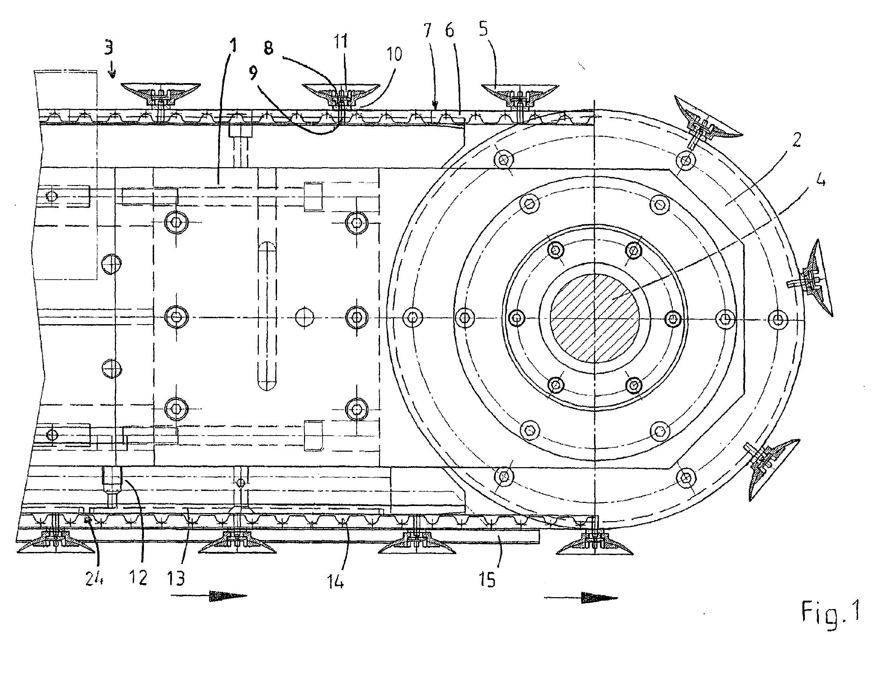

Figur 1 zeigt einen Teil einer erfindungsgemäßen Fördervorrichtung, die wiederum Teil einer Stapelanlage zum hängenden Transport und zum gezielten Abwurf von Blechen ist, im Längsschnitt. Der in Figur 1 dargestellte Ausschnitt zeigt ein Ende einer Förderbandhalterung 1, die hier als Gehäuse ausgebildet ist, an die sich ein Antriebsrad 2 für ein um die Förderbandhalterung 1 umlaufendes Förderband 3 anschließt. Das Antriebsrad 2 ist über eine gemeinsame Welle 4 mit weiteren Fördervorrichtungen verbunden, die zusammen an einer (nicht dargestellten) Staplerbrücke aufgehängt sind und hierdurch eine Stapelvorrichtung bilden.

Das Förderband 3 besteht im wesentlichen aus einem normalen, in der Fördertechnik verbreitet eingesetzten Zahnriemen 6 mit einer Anzahl von auf dessen Außenfläche 7 aufgesetzten Saugnäpfen 5. Jeder Saugnapf 5 ist mittels eines an der Außenfläche 7 des Zahnriemens 6 angeschweißten Halteelements 8 mit einer Unterdruck-Durchführung 9 im Zahnriemen 6 verbunden, wobei die Verbindung über einen Saugkanal 10 im inneren des Halteelements 8 erfolgt, welcher die Unterdruck-Durchführung 9 fortsetzt und im Boden 11 des Saugnapfs 5 mündet.

Im Inneren der Förderbandhalterung 1 sind hier nicht näher dargestellte Unterdruckkammern vorgesehen, die über Absaugkanäle 12 mit sich längs des Förderweges, jeweils über etwa den Abstand zwischen zwei Saugnäpfen 5 erstreckenden Längskanälen 13 verbunden sind. Die Unterteilung der Längskanäle 13 ermöglicht den gezielten Abwurf der Werkstücke an einer bestimmten Stapelstelle. Entlang dieser Längskanäle 13 bewegt sich das Förderband 3, dessen Rückseite erfindungsgemäß mit einer Dichtleiste 14 versehen ist, um das Eindringen von Falschluft zwischen dem Förderband 3 und einer Anlagefläche 24, an der entlang das Förderband 3 gleitet, zu verhindern. Durch den Zahnriemen 6 und die Dichtleiste 14 hindurch stellen die Unterdruck-Durchführungen 9 die Verbindung zwischen den Böden 11 der Saugnäpfe 5 und den Längskanälen 13 und somit letztendlich den Unterdruckkammern her, so dass die Saugnäpfe 5 dann, wenn ein Werkstück an deren Dichtlippen anliegt, von den Unterdruckkammern evakuiert werden.

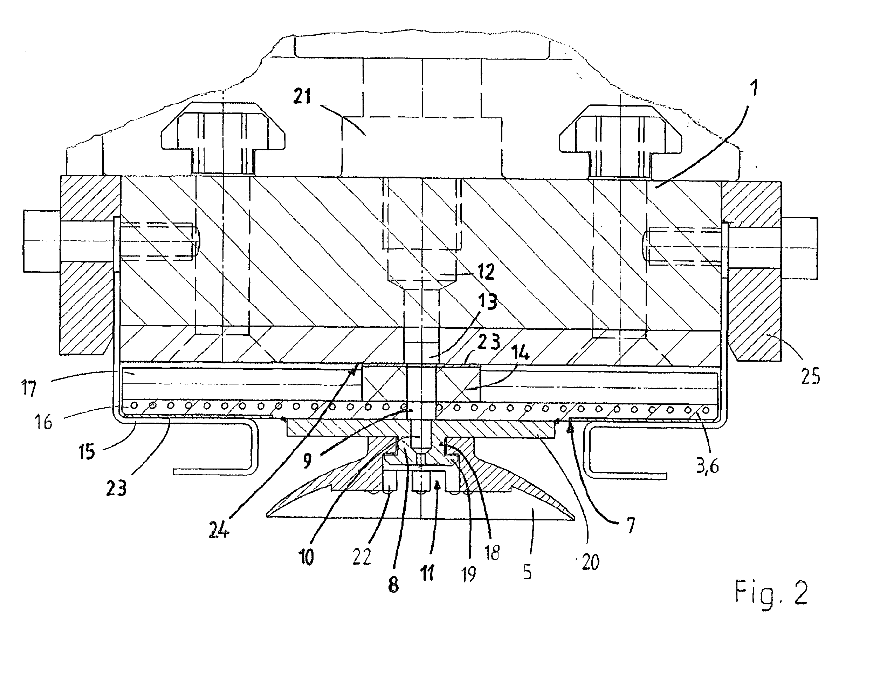

Seitlich neben den Saugnäpfen 5 wird das Förderband 3 von Umgriffsleisten 15 gehalten, die aufgrund einer zweifachen Abkantung die Halteelemente 8 und die Saugnäpfe 5 schützen, wie anhand Figur 2 näher erläutert wird.

Figur 2 zeigt einen Schnitt durch den unteren Teil der in Figur 1 gezeigten Vorrichtung, wobei die Schnittebene senkrecht zur Papierebene der Figur 1 verläuft. Aufgrund der vergrößerten Darstellung ist die erfindungsgemäße Ausbildung der Fördervorrichtung besser nachzuvollziehen:

Das dargestellte Förderband 3 besteht aus einem Zahnriemen 6, der sich aus einem mit Stahllitzen verstärkten Trägerband 16 mit rückseitig angebrachten Zähnen 17 und einer mittig in die Zähne 17 längs eingesetzten Dichtleiste 14 zusammensetzt und eine Anzahl von an Halteelementen 8 lösbar befestigten Saugnäpfen 5 aufweist. Jedes Halteelement 8 ist mit einem zylindrischen Schaft 18 und einem demgegenüber vorspringenden Haltering 19 versehen, was ihm die Form eines Nietes verleiht. Über einen großflächigen Fuß 20 ist das Halteelement 8 an der Außenfläche 7 des Zahnriemens 6 angeschweißt und somit fest mit diesem verbunden. Der Saugnapf 5 hingegen besteht aus einem elastischen Material und ist auf das Halteelement 8 lediglich aufgesetzt, wobei er den Haltering 19 des Halteelements 8 elastisch passend hintergreift. Für eine hohe Stabilität sorgt, dass der Saugnapf 5 nicht nur den Haltering 19 hintergreift, sondern auch am Schaft 18 des Halteelements 8 sowie an dessen Fuß 20 passend anliegt. Die äußere Kante des Halterings 19 ist für ein leichteres Aufstecken des Saugnapfs 5 auf das Halteelement 8 gebrochen.

Die Innenfläche des Saugnapfs 5 steht in Wirkverbindung mit den Unterdruckkammern 21 in der Förderbandhalterung 1. Über den Absaugkanal 12 evakuiert die Unterdruckkammer 21 den die Anlagefläche 24 teilenden Längskanal 13, wobei die Unterdruckdurchführung 9 durch den Zahnriemen 6 die Verbindung des Längskanals 13 mit dem Saugkanal 10 im Inneren des Halteelements 8 herstellt, welcher wiederum im Boden 11 des Saugnapfs 5 mündet. Um zu verhindern, dass ein vom Saugnapf 5 angesaugtes Werkstück in Kontakt mit dem Halteelement 8 kommt, sind im Boden des Saugnapfs 5 sternförmig angeordnete Anschlagsnoppen 22 vorgesehen, die von der Mündung des Saugkanals 10 beabstandet sind und einen Anschlag für das transportierte Werkstück bilden. Rechts und links neben dem Saugnapf 5 sind zwei Umgriffsleisten 15 vorhanden, die den Zahnriemen 6 festhalten und gegen die Anlagefläche 24 vorspannen.

Der Zahnriemen 6 war ursprünglich mit durchgehenden Zähnen 17 versehen; nach Ausfräsen einer entsprechend breiten Längsnut in die Zähne 17 konnte die Dichtleiste 14 eingelegt und mit dem Zahnriemen 6 verschweißt werden. Die Dichtleiste 14 besteht dabei aus einem Material geringerer Shore-Härte mit weichelastischen Eigenschaften und steht rückseitig über die Zähne 17 über. Durch die von den Umgriffsleisten 15 ausgeübte Vorspannung wird die Dichtleiste 14 unter Herstellung einer Flächendichtung an die Anlagefläche 24 angepresst, so dass keine Falschluft in den Längskanal 13 gelangen kann. An der Kontaktstelle mit der Anlagefläche 24 ist die Dichtleiste 14 mit einer verschleißfesten Gleitschicht 23 aus Gewebematerial versehen, um den Reibwiderstand und den Verschleiß möglichst gering zu halten. Die Anlagefläche 24 besteht aus einem glatt polierten Kunststoffmaterial mit geringem Reibungskoeffizienten. Ein auf die Gleitschicht 23 aufgebrachtes Fett auf Silikonbasis sorgt für eine verbesserte Dichtwirkung der Gewebeoberfläche.

Auch an den Kontaktstellen zwischen den Umgriffsleisten 15 und dem Zahnriemen 6 sind entsprechende Gleitschichten 23 vorgesehen, um auch hier die Reibung und den Verschleiß klein zu halten.

Wie anhand der Figur 2 gut zu erkennen ist, sind die Umgriffsleisten 15 bis an den Fuß 20 des Halteelements 8 für den Saugnapf 5 herangeführt, so dass sich zum einen die von den Umgriffsleisten 15 ausgeübte Vorspannung besser auf den Zahnriemen 6 verteilt, was insbesondere zur erwünschten Anpresskraft zwischen der Dichtleiste 14 und der Anlagefläche 24 führt, und zum anderen im Zusammenspiel mit dem aufgeschweißten großflächigen Fuß 20 des Halteelements 8 eine gerade am Ort der Krafteinleitung beim hängenden Transport erfolgende, exzellente Stabilisierung des Zahnriemens 6 gegen ein Durchhängen ergibt. Diese Stabilisierung unterstützt die Flächendichtung zwischen der Dichtleiste 14 und der Anlagefläche 24 zusätzlich.

Die seitlichen Umgriffsleisten 15 sind mittels Klemmbacken 25 an der Förderbandhalterung 1 befestigt, so dass sie zur Justage und zum Nachstellen leicht in ihrer Höhe stufenlos verstellt werden können.

Eine zweifach abgekantete Verlängerung der seitlichen Umgriffsleisten 15 erzeugt eine Profilierung, die den Saugnapf 5 seitlich flankiert und höher als das Halteelement 8 über die Außenfläche 7 des Zahnriemens 6 übersteht. Ein gegebenenfalls hochstehendes Blech wird also von den seitlichen Umgriffsleisten 15 abgelenkt und kann infolge dessen mit seiner Kante nicht das Halteelement 8 beschädigen, sondern höchstens den Saugnapf 5 vom Halteelement 8 abziehen. Um die Funktion des Saugnapfs 5 nicht zu stören, stehen die seitlichen Umgriffsleisten 15 andererseits jedoch nicht so weit über die Außenfläche 7 des Zahnriemens 6 hervor, wie die Anschlagsnoppen 22 des Saugnapfs 5.

Es versteht sich, dass die in den Figuren 1 und 2 dargestellte Fördervorrichtung nur ein Beispiel für die Verwirklichung der Erfindung ist. Insbesondere sind auch andere Ausbildungen der Ansaugöffnungen, beispielsweise als Saugtaschen in einer weichelastischen Auflage auf dem Zahnriemen, sowie auch andere Formen und Ausgestaltungen der seitlichen Umgriffsleisten 15 denkbar.

### Bezugszeichenliste

- 1: Förderbandhalterung
- 2: Antriebsrad
- 3: Förderband
- 4: Welle
- 5: Saugnapf
- 6: Zahnriemen
- 7: Außenfläche (von 6)
- 8: Halteelement
- 9: Unterdruck-Durchführung
- 10: Saugkanal
- 11: Boden (von 5)
- 12: Absaugkanal
- 13: Längskanal
- 14: Dichtleiste
- 15: Umgriffsleiste
- 16: Trägerband
- 17: Zahn
- 18: Schaft
- 19: Haltering
- 20: Fuß
- 21: Unterdruckkammer
- 22: Anschlagsnoppen
- 23: Gleitschicht
- 24: Anlagefläche
- 25: Klemmbacke

## Patentansprüche

1. Fördervorrichtung zum insbesondere hängenden Transport von Werkstücken, umfassend:
- Ein umlaufendes Förderband (3) mit dieses durchsetzenden Ansaugöffnungen (9, 10) zum Festhalten der Werkstücke,
- eine Förderbandhalterung (1) mit einer Anlagefläche (24) für das Förderband (3), an der zumindest der an die Ansaugöffnungen (9, 10) angrenzende Bereich der Rückseite des Förderbandes (3) gleitend anliegt,
- mindestens einen in die Anlagefläche (24) integrierten, zum Förderband (3) hin offenen Längskanal (13), der sich entlang der Bewegungsrichtung des Förderbandes (3) erstreckt und mit dessen Ansaugöffnungen (9, 10) fluchtet,
- Mittel zum Erzeugen eines Unterdrucks, die mit dem Längskanal (13) in Wirkverbindung stehen,
- seitliche, an der Förderbandhalterung (1) angebrachte Umgriffsleisten (15) für das Förderband (3), und
- eine am Förderband (3) im Bereich der Ansaugöffnungen (9) angeordnete Dichtleiste (14) aus weichelastischem Material,
**dadurch gekennzeichnet,**
- **dass** die Dichtleiste (14) an ihrer an der Anlagefläche (24) anliegenden Oberfläche mit einer verschleißfesten Gleitschicht (23) versehen ist,
- und **dass** die seitlichen Umgriffsleisten (15) so ausgestaltet sind, dass sie das Förderband (3) gegen die Anlagefläche (24) vorspannen.

2. Fördervorrichtung nach Anspruch 1,
**dadurch gekennzeichnet,**
**dass** die Dichtleiste (14) eine geringere Shore-Härte als der Rest des Förderbandes (3) aufweist.

3. Fördervorrichtung nach einem der Ansprüche 1 oder 2, **dadurch gekennzeichnet,**
**dass** das Förderband (3) rückseitig neben der Dichtleiste (14) mit einer Zahnung (17) versehen ist.

4. Fördervorrichtung nach einem der Ansprüche 1 bis 3,
**dadurch gekennzeichnet,**
**dass** die Gleitschicht (23) mit einem hochviskosen Medium, insbesondere mit einem Fett auf Silikonbasis versehen ist.

5. Fördervorrichtung nach einem der Ansprüche 1 bis 4, **dadurch gekennzeichnet,**
**dass** die seitlichen Umgriffsleisten (15) höhenverstellbar an der Förderbandhalterung (1) angebracht sind.

6. Fördervorrichtung nach einem der Ansprüche 1 bis 5, **dadurch gekennzeichnet,**
**dass** das Förderband (3) an seiner Transportseite eine Anzahl von Saugnäpfen (5) aufweist, deren Innenflächen jeweils mit einer Ansaugöffnung (9) in Wirkverbindung stehen.

7. Fördervorrichtung nach Anspruch 6, **dadurch gekennzeichnet,**
**dass** sich die seitlichen Umgriffsleisten (15) zur Mitte des Förderbandes (3) hin bis nahe an den Bereich der Saugnäpfe (5) heran erstrecken.

8. Fördervorrichtung nach Anspruch 7, **dadurch gekennzeichnet,**
**dass** die seitlichen Umgriffsleisten (15) so profiliert sind, dass sie nahezu so hoch wie die Saugnäpfe (5) über das Förderband (3) überstehen.

9. Fördervorrichtung nach einem der Ansprüche 6 bis 8,
**dadurch gekennzeichnet,**
**dass** die Saugnäpfe (5) elastisch klemmend in oder auf Halteelementen (8) sitzen, welche ihrerseits fest an der Transportseite des Förderbandes (3) fixiert sind.

10. Fördervorrichtung nach Anspruch 9,
**dadurch gekennzeichnet,**
**dass** die Halteelemente (8) für die Saugnäpfe (5) auf die Außenfläche der Transportseite des Förderbandes (3) aufgesetzt sind.

11. Fördervorrichtung nach Anspruch 10,
**dadurch gekennzeichnet,**
**dass** die Halteelemente (8) auf das Förderband (3) geklebt oder geschweißt sind.

12. Fördervorrichtung nach einem der Ansprüche 9 bis 11,
**dadurch gekennzeichnet,**
**dass** die Halteelemente (8) im wesentlichen aus einem Fuß (20), einem Schaft (18) mit einem Saugkanal (10) und einem gegenüber dem Schaft (18) vorspringenden Haltering (19) bestehen, wobei die Saugnäpfe (5) jeweils den Haltering (19) elastisch hintergreifen und sich am Schaft (18) und am Fuß (20) des Halteelements (8) abstützen.

13. Fördervorrichtung nach einem der Ansprüche 6 bis 12,
**dadurch gekennzeichnet,**
**dass** das Förderband (3) außer den Saugnäpfen (5) keine lösbaren Teile enthält.

14. Fördervorrichtung nach Anspruch 8 und einem der Ansprüche 9 bis 13,
**dadurch gekennzeichnet,**
**dass** die seitlichen Umgriffsleisten (15) so profiliert sind, dass sie höher als die Halteelemente (8), aber weniger hoch als die Saugnäpfe (5) über das Förderband (3) überstehen.

## Claims

1. Conveyor device for the transport of workpieces, especially the suspended transport of workpieces, comprising:
- a circulating conveyor belt (3) having suction openings (9, 10) passing through it for holding the workpieces,
- a conveyor belt holding device (1) having a contact surface (24) for the conveyor belt (3), with which at least the region of the rear side of the conveyor belt (3) adjacent to the suction openings (9, 10) is in sliding contact,
- at least one longitudinal channel (13), which is integrated into the contact surface (24) and is open towards the conveyor belt (3), which channel (13) extends along the direction of movement of the conveyor belt (3) and is in alignment with the suction openings (9, 10) thereof,
- means for generating reduced pressure which are in operative connection with the longitudinal channel (13),
- lateral surrounding rails (15) for the conveyor belt (3) which are mounted on the conveyor belt holding device (1), and
- a sealing strip (14) of flexible material arranged on the conveyor belt (3) in the region of the suction openings (9),
**characterised in that**
- the sealing strip (14) is provided with a wear-resistant slide layer (23) on its surface that is in contact with the contact surface (24),
- and the lateral surrounding rails (15) are so configured that they bias the conveyor belt (3) towards the contact surface (24).

2. Conveyor device according to claim 1,
**characterised in that**
the sealing strip (14) has a lower Shore hardness than the remainder of the conveyor belt (3).

3. Conveyor device according to either one of claims 1 and 2,
**characterised in that**
the conveyor belt (3) is provided with teeth (17) on the rear side next to the sealing strip (14).

4. Conveyor device according to any one of claims 1 to 3,
**characterised in that**
the slide layer (23) is provided with a highly viscous medium, especially with a silicone-based grease.

5. Conveyor device according to any one of claims 1 to 4,
**characterised in that**
the lateral surrounding rails (15) are mounted on the conveyor belt holding device (1) so as to be height-adjustable.

6. Conveyor device according to any one of claims 1 to 5,
**characterised in that**
the conveyor belt (3) has on its transport side a number of suction cups (5), the inner surfaces of each of which are in operative connection with a suction opening (9).

7. Conveyor device according to claim 6,
**characterised in that**
the lateral surrounding rails (15) extend towards the centre of the conveyor belt (3) as far as a point close to the region of the suction cups (5).

8. Conveyor device according to claim 7,
**characterised in that**
the lateral surrounding rails (15) are so profiled that they project beyond the conveyor belt (3) to almost the same extent as the suction cups (5).

9. Conveyor device according to any one of claims 6 to 8,
**characterised in that**
the suction cups (5) are seated by resiliently clamping in or on holding elements (8) which in turn are rigidly fixed to the transport side of the conveyor belt (3).

10. Conveyor device according to claim 9,
**characterised in that**
the holding elements (8) for the suction cups (5) are mounted on the outer surface of the transport side of the conveyor belt (3).

11. Conveyor device according to claim 10,
**characterised in that**
the holding elements (8) are adhesively bonded or welded to the conveyor belt (3).

12. Conveyor device according to any one of claims 9 to 11,
**characterised in that**
the holding elements (8) consist essentially of a foot (20), a shaft (18) having a suction channel (10) and a holding ring (19) which projects relative to the shaft (18), the suction cups (5) each engaging resiliently behind the holding ring (10) and being supported on the shaft (18) and on the foot (20) of the holding element (8).

13. Conveyor device according to any one of claims 6 to 12,
**characterised in that**
the conveyor belt (3) contains no detachable parts except for the suction cups (5).

14. Conveyor device according to claim 8 and any one of claims 9 to 13,
**characterised in that**
the lateral surrounding rails (15) are so profiled that they project beyond the conveyor belt (3) to a greater extent than the holding elements (8) but to a lesser extent than the suction cups (5).

## Revendications

1. Dispositif de convoyage, en particulier pour le transport suspendu de pièces, comprenant :
- une bande convoyeuse (3) en révolution, munie d'orifices d'aspiration (9, 10) qui la traversent et servent à consigner les pièces à demeure,
- un support (1) de bande convoyeuse, équipé d'une surface d'appui (24) destinée à la bande convoyeuse (3) et contre laquelle est appliquée, de manière glissante, au moins la région de la face postérieure de ladite bande convoyeuse (3) qui est adjacente aux orifices d'aspiration (9, 10),
- au moins un canal longitudinal (13) intégré dans la surface d'appui (24), ouvert en direction de la bande convoyeuse (3), s'étendant le long de la direction de mouvement de ladite bande convoyeuse (3) et coïncidant avec les orifices d'aspiration (9, 10) de cette dernière,
- des moyens de génération d'une dépression, qui sont en liaison opérante avec le canal longitudinal (13),
- des barrettes latérales (15) d'emprisonnement de la bande convoyeuse (3), implantées sur le support (1) de ladite bande convoyeuse, et
- un listel d'étanchement (14) en un matériau doué de souplesse élastique, disposé sur la bande convoyeuse (3) dans la région des orifices d'aspiration (9),
**caractérisé par le fait**
- **que** le listel d'étanchement (14) est pourvu, sur sa surface appliquée contre la surface d'appui (24), d'une couche de glissement (23) résistant à l'usure ;
- et par le fait que les barrettes latérales d'emprisonnement (15) sont conçues de telle sorte qu'elles imposent une précontrainte à la bande convoyeuse (3) contre la surface d'appui (24).

2. Dispositif de convoyage selon la revendication 1,
**caractérisé par le fait**
**que** le listel d'étanchement (14) présente une plus faible dureté Shore que le reste de la bande convoyeuse (3).

3. Dispositif de convoyage selon l'une des revendications 1 ou 2,
**caractérisé par le fait**
**que** la bande convoyeuse (3) est munie d'une denture (17) à sa face postérieure, à côté du listel d'étanchement (14).

4. Dispositif de convoyage selon l'une des revendications 1 à 3,
**caractérisé par le fait**
**que** la couche de glissement (23) est munie d'un agent à viscosité élevée, en particulier d'une graisse à base de silicone.

5. Dispositif de convoyage selon l'une des revendications 1 à 4,
**caractérisé par le fait**
**que** les barrettes latérales d'emprisonnement (15) sont montées réglables en hauteur sur le support (1) de la bande convoyeuse.

6. Dispositif de convoyage selon l'une des revendications 1 à 5,
**caractérisé par le fait**
**que** la bande convoyeuse (3) comporte, sur son côté transport, un certain nombre de ventouses (5) dont les faces intérieures sont respectivement en liaison opérante avec un orifice d'aspiration (9).

7. Dispositif de convoyage selon la revendication 6,
**caractérisé par le fait**
**que** les barrettes latérales d'emprisonnement (15) s'étendent en direction du centre de la bande convoyeuse (3), jusqu'à proximité de la région des ventouses (5).

8. Dispositif de convoyage selon la revendication 7,
**caractérisé par le fait**
**que** les barrettes latérales d'emprisonnement (15) sont profilées de telle sorte qu'elles soient en saillie, au-delà de la bande convoyeuse (3), selon approximativement la même hauteur que les ventouses (5).

9. Dispositif de convoyage selon l'une des revendications 6 à 8,
**caractérisé par le fait**
**que** les ventouses (5) sont placées, avec effet de coincement élastique, dans ou sur des éléments de retenue (8) qui, à leur tour, sont verrouillées rigidement au côté transport de la bande convoyeuse (3).

10. Dispositif de convoyage selon la revendication 9,
**caractérisé par le fait**
**que** les éléments de retenue (8) affectés aux ventouses (5) sont mis en place sur la face extérieure du côté transport de la bande convoyeuse (3).

11. Dispositif de convoyage selon la revendication 10,
**caractérisé par le fait**
**que** les éléments de retenue (8) sont collés ou soudés sur la bande convoyeuse (3).

12. Dispositif de convoyage selon l'une des revendications 9 à 11,
**caractérisé par le fait**
**que** les éléments de retenue (8) se composent pour l'essentiel d'un pied (20), d'un fût (18) présentant un canal d'aspiration (10), et d'une bague d'arrêt (19) en saillie vis-à-vis dudit fût (18), sachant que les ventouses (5) emprisonnent respectivement la bague d'arrêt (19) par-derrière; de manière élastique, et prennent appui contre le fût (18) et le pied (20) de l'élément de retenue (8).

13. Dispositif de convoyage selon l'une des revendications 6 à 12,
**caractérisé par le fait**
**que** la bande convoyeuse (3) ne comporte pas de parties amovibles, à l'exception des ventouses (5).

14. Dispositif de convoyage selon la revendication 8 et l'une des revendications 9 à 13,
**caractérisé par le fait**
**que** les barrettes latérales d'emprisonnement (15) sont profilées de telle sorte qu'elles soient en saillie, au-delà de la bande convoyeuse (3), plus haut que les éléments de retenue (8), mais moins haut que les ventouses (5).
